(19) Europäisches Patentamt
European Patent Office
Office européen des brevets

(11) **EP 2 615 732 A1**

(12) **EUROPEAN PATENT APPLICATION**
published in accordance with Art. 153(4) EPC

(43) Date of publication:
**17.07.2013 Bulletin 2013/29**

(51) Int Cl.:
***H02M 7/12*** *(2006.01)*

(21) Application number: **11823389.9**

(22) Date of filing: **18.08.2011**

(86) International application number:
**PCT/JP2011/068698**

(87) International publication number:
**WO 2012/032910 (15.03.2012 Gazette 2012/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2010 JP 2010202617**

(71) Applicant: **Hitachi Industrial Equipment Systems Co., Ltd.**
**Tokyo 101-0022 (JP)**

(72) Inventors:
• **NOTOHARA, Yasuo**
  **Hitachi-shi**
  **Ibaraki 319-1292 (JP)**
• **IWASE, Yuta**
  **Narashino-shi**
  **Chiba 275-8611 (JP)**
• **SANO, Masahiro**
  **Narashino-shi**
  **Chiba 275-8611 (JP)**
• **LI, Dongsheng**
  **Hitachinaka-shi**
  **Ibaraki 312-8506 (JP)**

(74) Representative: **MERH-IP**
**Matias Erny Reichl Hoffmann**
**Paul-Heyse-Strasse 29**
**80336 München (DE)**

(54) **POWER CONVERSION APPARATUS, MOTOR DRIVE APPARATUS, AND REFRIGERATING AND AIR-CONDITIONING APPARATUS**

(57)    A power conversion apparatus includes: a three phase AC reactor that is connected to a three phase AC power supply; a three phase diode bridge; a plurality of smoothing capacitors that are mutually connected in series; bidirectional power switches provided between the AC input side of the three phase diode bridge and an intermediate point of the plurality of smoothing capacitors; and a controller that controls the bidirectional power switches. The controller makes the bidirectional power switch corresponding to the phase of the three phase AC power supply at intermediate electrical potential perform its switching operation for a predetermined interval.

FIG.1

**Description**

TECHNICAL FIELD

The present invention relates to a power conversion apparatus that converts three phase AC power to DC power, and to a motor drive apparatus and a refrigerating and air conditioning apparatus that utilize this power conversion apparatus.

BACKGROUND ART

Inverter devices for driving three phase AC electric motors are widespread in motor drive apparatus and refrigerating and air conditioning apparatus that are used in the industrial field. With this type of inverter device, when operating upon incoming three phase AC power, a rectification circuit is required for conversion from the three phase AC power to DC power. If a three phase diode rectifier is used in this rectification circuit, then the current that is generated includes a large number of power supply harmonic components, therefore there is a fear that this will exert a negative influence upon the power system on the power supply side. Due to this, in recent years, not only has harmonic component regulation been specified by the IEC (International Electrotechnical Commission) (IEC61000-3-2 (phase currents <16A) and IEC61000-3-12 (16A< phase currents <75A)), but also regulation of harmonic current components has been enacted in Europe, China, Japan, and so on. It is anticipated that, in the future, power supply current harmonic countermeasures will be required for inverter devices of the type described above.
On the other hand, reduction of harmonic components of the input current and stabilized control of the output DC voltage becomes possible by using a three phase PWM converter made from six semiconductor power elements as the rectification circuit. However, the cost of the apparatus is greatly increased, since a large number of semiconductor power elements and a complicated control means are required.
In particular, in the case of devices for consumer and industrial use such as air conditioners, general purpose inverters, charging devices for electric automobiles and so on, since serious emphasis is placed upon the production cost, accordingly cheaply priced countermeasures against harmonic components are very much to be desired.
In the prior art, as a cheap priced harmonic component countermeasure for a three phase converter device, as described in Patent Document #1 and Patent Document #2, a method of improving the input currents has been proposed at which an AC reactor and three bidirectional power switches are provided on the input side of a three phase diode rectifier, and the bidirectional power switches are turned ON once or a plurality of times at predetermined timings after the zero crossing points of the power supply voltages for the various phases.

CITATION LIST

PATENT LITERATURE

Patent Literature 1: Japanese Laid-Open Patent Publication No. 2004-166359; Patent Literature 2: Japanese Patent No. 3, 422, 218.

SUMMARY OF THE INVENTION

TECHNICAL PROBLEM

However, with the technique described above, increases in the size and the cost of the apparatus are not avoided, since a large AC reactor is required in order to satisfy the harmonic component regulations described above. In particular, since the heat loss engendered due to the resistance of the AC reactor increases in proportion to the square of the input current, accordingly there is a fear that, during high load operation, heat generation by the reactor, decrease of the efficiency of the apparatus, decrease of the DC voltage, and so on may occur. Moreover, since a predetermined conductive pattern is required, this cannot cope with cases when the load and the power supply voltage fluctuate.

SOLUTION TO THE PROBLEM

A power conversion apparatus according to a first aspect of the present invention includes: a three phase AC reactor that is connected to a three phase AC power supply; a three phase diode bridge; a plurality of smoothing capacitors, provided between the DC output side of the three phase diode bridge and a DC load, that are mutually connected in series; bidirectional power switches provided, corresponding to each phase of the three phase AC power supply, between the AC input side of the three phase diode bridge and an intermediate point of the plurality of smoothing capacitors; a voltage phase detection means that detects the voltage phase of the three phase AC power supply; a current detection means that detects the currents of the three phase AC power supply; and a controller that controls the bidirectional power switches. In this power conversion apparatus, the controller controls the bidirectional power switches so that the bidirectional power switch corresponding to the phase of the three phase AC power supply at intermediate electrical potential is made to perform its switching operation for a predetermined interval.

According to a second aspect of the present invention, in the power conversion apparatus of the first aspect, it is preferred that the controller makes the bidirectional power switch corresponding to the phase of the three phase AC power supply at intermediate electrical potential perform its switching operation to be ON in an interval around the timing at which the voltage of the corresponding intermediate electrical potential becomes zero.

According to a third aspect of the present invention, in the power conversion apparatus of the first or second aspect, the controller may make the bidirectional power switch corresponding to the phase of the three phase AC power supply at intermediate electrical potential perform its switching operation in an interval of the corresponding intermediate electrical potential, or in an interval greater than that interval.

According to a fourth aspect of the present invention, in the power conversion apparatus of the third aspect, it is preferred that the controller makes the bidirectional power switch corresponding to the phase of the three phase AC power supply at intermediate electrical potential perform its switching operation in an interval of 60° or more of electrical angle.

According to a fifth aspect of the present invention, in the power conversion apparatus of any one of the first through fourth aspects, the controller can make the bidirectional power switch corresponding to the phase of the three phase AC power supply at intermediate electrical potential perform its switching operation for the predetermined interval so that the current of the three phase AC power supply becomes a predetermined current value.

According to a sixth aspect of the present invention, in the power conversion apparatus of the fifth aspect, it is preferred that the controller makes the bidirectional power switch corresponding to the phase of the three phase AC power supply at intermediate electrical potential perform its switching operation for the predetermined interval so that the current of the three phase AC power supply becomes a current value having a waveform that resembles that of the voltage phase of the three phase AC power supply.

According to a seventh aspect of the present invention, the power conversion apparatus of any one of the first through sixth aspects may further include a charged voltage detection means that detects the charged voltages of the plurality of smoothing capacitors. In this power conversion apparatus, it is preferred that the controller corrects the phases of the intervals at which the bidirectional power switches perform their switching operation so that the charged voltages of the plurality of smoothing capacitors balance.

According to an eighth aspect of the present invention, in the power conversion apparatus of the seventh aspect, the plurality of smoothing capacitors can include a first smoothing capacitor that is connected to the positive side and a second smoothing capacitor that is connected to the negative side. In this power conversion apparatus, it is preferred that the controller controls the bidirectional power switches so as to delay the phases of the intervals at which the bidirectional power switches perform switching operation when the charged voltage of the first smoothing capacitor is lower than the charged voltage of the second smoothing capacitor, and so as to advance the phases of the intervals at which the bidirectional power switches perform switching operation when the charged voltage of the first smoothing capacitor is higher than the charged voltage of the second smoothing capacitor.

According to a ninth aspect of the present invention, in the power conversion apparatus of any one of the first through eighth aspects, the current detection means can detect the currents of the three phase AC power supply from the currents flowing between the bidirectional power switches and an intermediate point of the plurality of smoothing capacitors.

According to a tenth aspect of the present invention, in the power conversion apparatus of the ninth aspect, it is preferred that the controller provides a paused interval in the switching operations of the bidirectional power switches.

According to an eleventh aspect of the present invention, in the power conversion apparatus of the tenth aspect, it is preferred that the controller provides the paused interval within at least one of the intervals around the vicinity of the phases at which the voltages of the various phases of the three phase AC power supply intersect.

A motor drive apparatus according to a twelfth aspect of the present invention includes a converter circuit that converts three phase AC power supplied from a three phase AC power supply into DC power and an inverter that converts the DC power outputted from the converter circuit to AC power and that drives a motor using the AC power. In this motor drive apparatus, the converter circuit includes: a three phase AC reactor that is connected to the three phase AC power supply; a three phase diode bridge; a plurality of smoothing capacitors, provided between the DC output side of the three phase diode bridge and a DC load, that are mutually connected in series; bidirectional power switches provided, corresponding to each phase of the three phase AC power supply, between the AC input side of the three phase diode bridge and an intermediate point of the plurality of smoothing capacitors; a voltage phase detection means that detects the voltage phase of the three phase AC power supply; a current detection means that detects the currents of the three phase AC power supply; and a controller that controls the bidirectional power switches; and the controller controls the bidirectional power switches so that the bidirectional power switch corresponding to the phase of the three phase AC power supply at intermediate electrical potential is made to perform its switching operation for a predetermined interval.

According to a thirteenth aspect of the present invention, in the motor drive apparatus of the twelfth aspect, it is preferred that the controller makes the bidirectional power switch corresponding to the phase of the three phase AC power supply at intermediate electrical potential perform its switching operation in an interval of the corresponding intermediate electrical potential, or in an interval greater than that interval.

A refrigerating and air conditioning apparatus according to a fourteenth aspect of the present invention includes the motor drive apparatus of the twelfth or thirteenth aspect, and a compressor in which the motor is provided, and that compresses refrigerant in its interior according to driving of the motor.

ADVANTAGEOUS EFFECT OF THE INVENTION

According to the present invention, it is possible to implement at low cost a power conversion apparatus that converts three phase AC power to DC power while providing harmonic component regulation, and a motor drive apparatus and a refrigerating and air conditioning apparatus that use this power conversion apparatus.

BRIEF DESCRIPTION OF THE DRAWINGS

Fig. 1 is a figure showing the general structure of a three phase converter device according to a first embodiment;
Fig. 2 is a structural diagram of a bidirectional power switch 6 in the first embodiment;
Fig. 3 is a control block diagram of the three phase converter device of the first embodiment;
Fig. 4 is an internal structural diagram of a power supply voltage phase calculator 11 of the first embodiment;
Fig. 5 is a figure for explanation of processing performed by this power supply voltage phase calculator 11 of the first embodiment;
Fig. 6 shows concrete structural examples of a current error calculator 13 and a PWM control signal generator 14 of the first embodiment;
Fig. 7 is an explanatory figure for the operation of the first embodiment;
Fig. 8 shows simulation results for waveforms of the power supply voltages, the power supply currents, and the PWM signals in the first embodiment;
Fig. 9 shows simulation results for harmonic current components in the first embodiment;
Fig. 10 is a control block diagram of a three phase converter device of a second embodiment;
Fig. 11 shows simulation results (without control) in the second embodiment;
Fig. 12 shows simulation results (with control) in the second embodiment;
Fig. 13 is a general structural diagram of a third embodiment;
Fig. 14 is a control block diagram of the three phase converter device of the third embodiment;
Fig. 15 shows simulation results (entire waveforms) in the third embodiment;
Fig. 16 is an explanatory figure for the operation of a fourth embodiment;
Fig. 17 shows simulation results in the fourth embodiment;
Fig. 18 is a figure showing the external appearance of a hybrid IC;
Fig. 19 is a figure showing the external appearance of a motor drive module; and
Fig. 20 is a structural diagram of a refrigerating and air conditioning apparatus.

DESCRIPTION OF THE EMBODIMENTS

(First Embodiment)

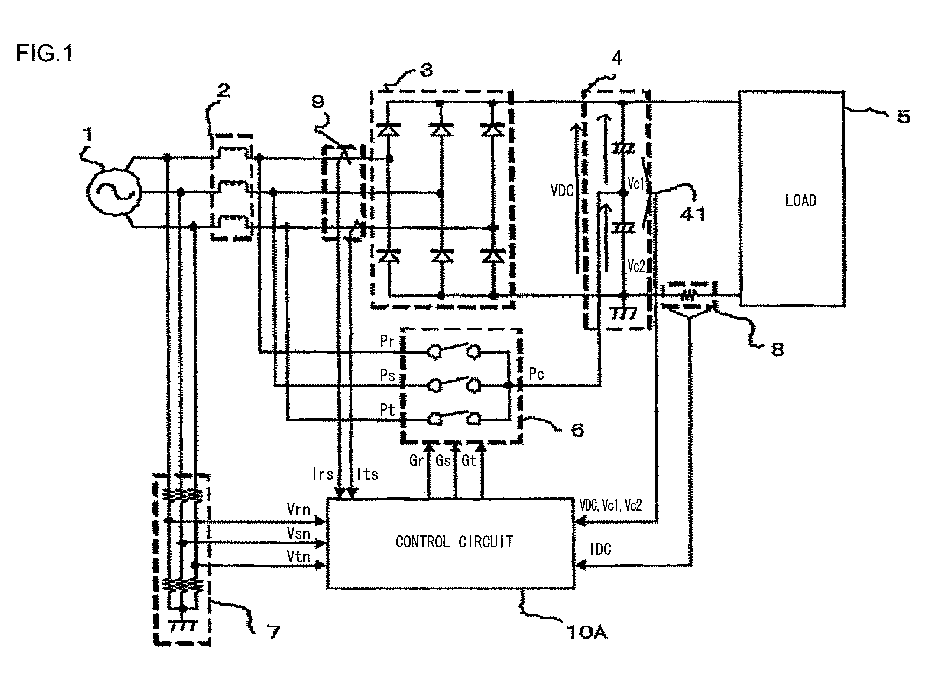

The first embodiment will now be explained using Figs. 1 through 9.

Fig. 1 shows the general structure of a three phase converter device according to the first embodiment of the present invention. This three phase converter device is a power conversion apparatus that converts three phase AC power supplied from a three phase AC power supply 1 into DC power and supplies it to a load 5, and that performs control to suppress harmonic components in the power supply current by employing the switching operation of a bidirectional power switch.

This three phase converter device includes: a three phase AC reactor 2 that is connected to the three phase AC power supply 1; a three phase diode bridge 3 that is connected to the three phase AC power supply 1 via the three phase AC reactor 2; a plurality of smoothing capacitors 4 (in Fig. 1, two) that are mutually connected in series, and that are connected to the DC side of the three phase diode bridge 3; a bidirectional power switch 6 that is provided between the AC input side terminals of the three phase diode bridge 3 and an intermediate point of the plurality of smoothing capacitors 3 that are connected in series; a voltage phase detection means 7 that detects the voltage phases of the three phase AC power supply 1; a current detection means 9 that detects the currents of the three phase AC power supply 1; a DC current detection means 8 that detects the DC current IDC flowing to the load 5; a charged voltage detection means 41 that detects the charged voltages Vc1 and Vc2 of the smoothing capacitors 4, and the DC voltage VDC that is the total thereof; and a control circuit 10A that controls the bidirectional power switch 6.

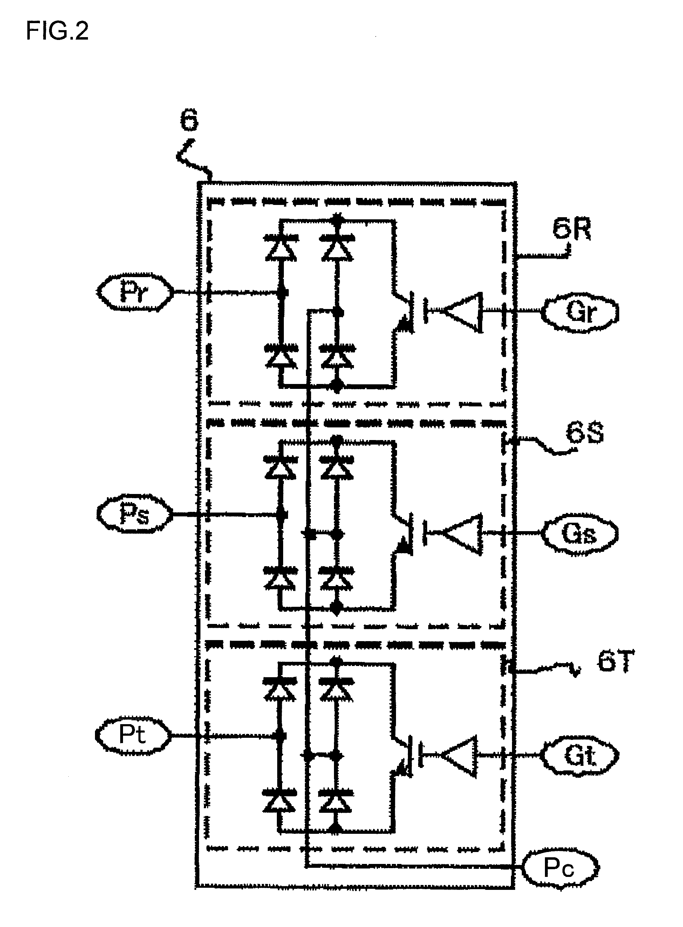

Fig. 2 is a structural diagram of the bidirectional power switch 6. In this embodiment, the bidirectional power switch 6 includes three bidirectional power switches 6R, 6S, and 6T, each of which includes a single phase diode bridge and an IGBT. It should be understood that the bidirectional power switch 6 is not limited to the structure shown in Fig. 2. Provided that it is a bidirectional power switch that operates according to a switching signal from the control circuit 10A, there will be no problem even if it incorporates other structures and other semiconductor elements.

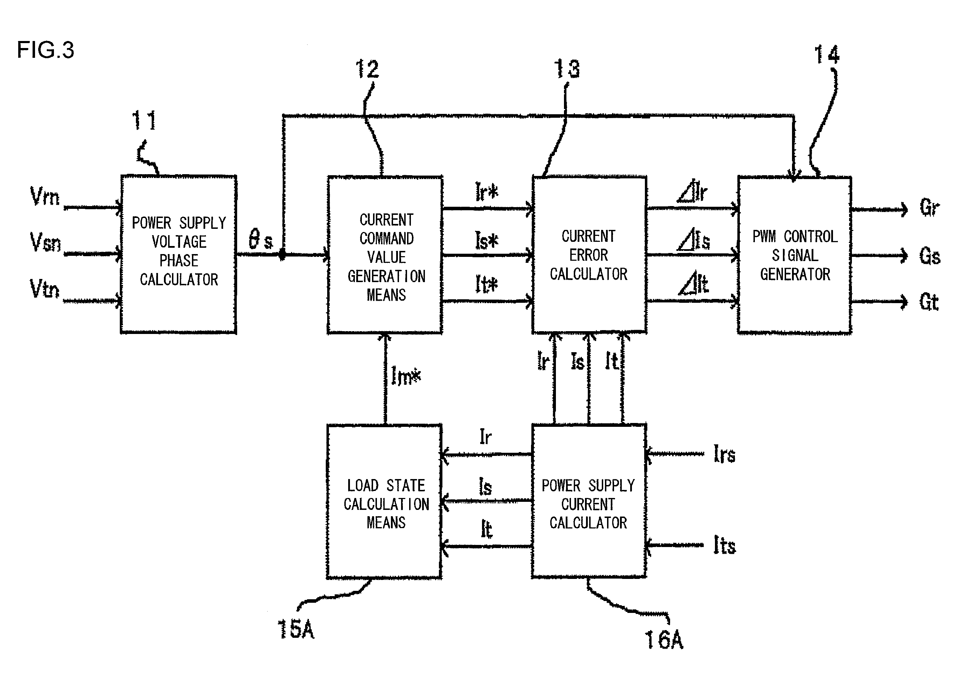

Fig. 3 shows a control block diagram of the three phase converter device of this embodiment that is performed in the control circuit 10A. The control blocks shown in Fig. 3 are implemented by digital calculation processing using a microcomputer. It should be understood that it would also be possible to implement the control blocks of Fig. 3 by using a calculation system other than a microcomputer, for example by using semiconductor calculation elements such as DSPs or the like.

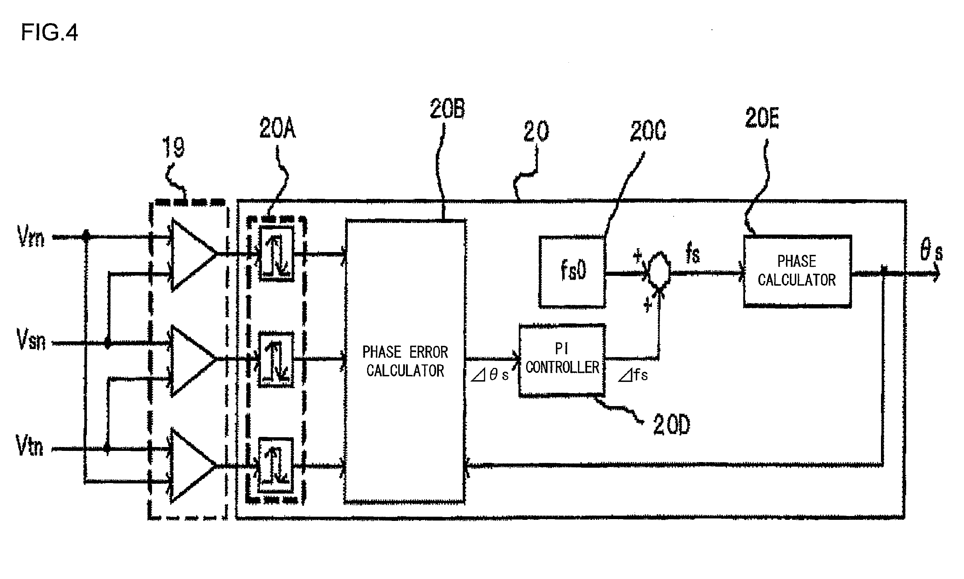

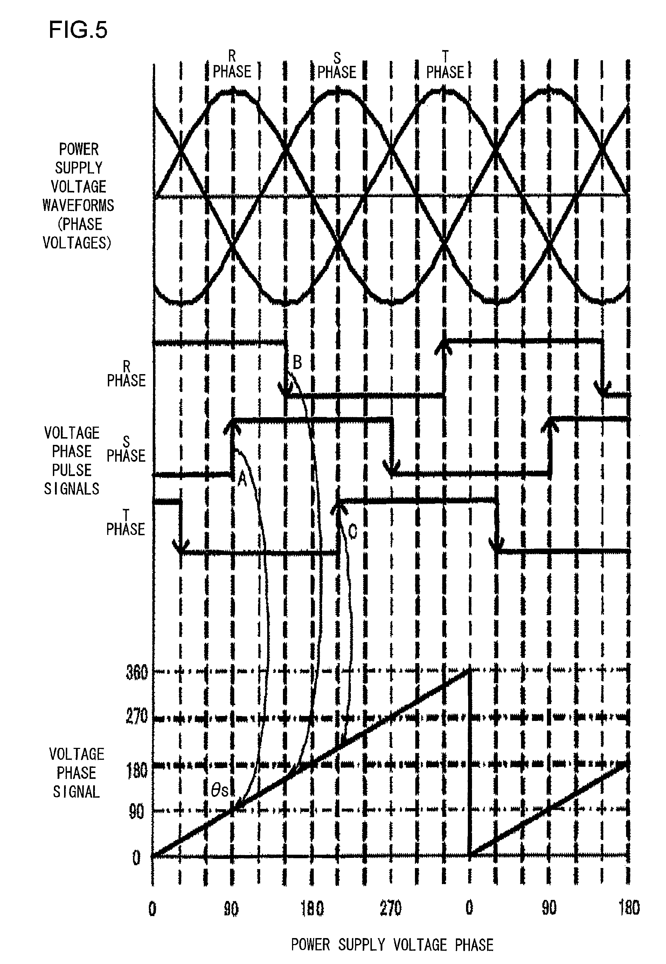

A power supply voltage phase calculator 11 calculates a voltage phase signal $\theta s$ by using voltage signals Vrn, Vsn, and Vtn obtained by the voltage phase detection means 7 of Fig. 1 that give the voltage phases for the various phases of the three phase AC power supply 1. The concrete method for this calculation will be described hereinafter with reference to Figs. 4 and 5.

A current command value generation means 12 calculates three phase AC current commands Ir*, Is*, and It* by using the voltage phase signal $\theta s$ calculated by the power supply voltage phase calculator 11 and a load information signal Im* from a load state calculation means 15A. In concrete terms, the three phase AC current commands Ir*, Is*, and It* are calculated according to the calculation shown in the following Equations (1):

$$Ir^* = Im * \sin (\theta s)$$
$$Is^* = Im * \sin (\theta s + 2\pi/3) \cdots \text{Equations (1)}$$
$$It^* = Im * \sin (\theta s - 2\pi/3)$$

A current error calculator 13 then calculates the errors $\Delta Ir$, $\Delta Is$, and $\Delta It$ of current values Ir, Is, and It from a power supply current calculator 16A with respect to the three phase AC current commands Ir*, Is*, and It* calculated by the current command value generation means 12.

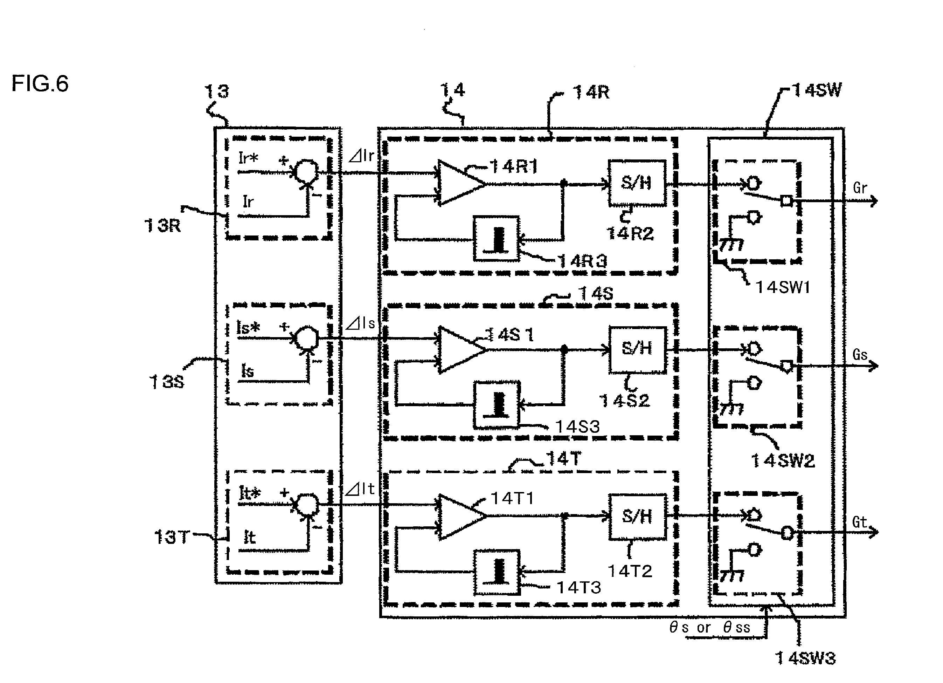

And a PWM control signal generator 14 outputs PWM signals Gr, Gs, and Gt by using the current errors $\Delta Ir$, $\Delta Is$, and $\Delta It$ calculated by the current error calculator 13 and the voltage phase signal $\theta s$ from the power supply voltage phase calculator 11. The operation of the current error calculator 13 and of the power supply voltage phase calculator 11 will be described hereinafter with reference to Fig. 6.

The load state calculation means 15A calculates the load information signal Im* using the current values Ir, Is, and It from the power supply current calculator 16A. In this embodiment, the maximum of the input current value is calculated using the current values Ir, Is, and It, and this is taken as the load information signal Im*. It should be understood that it would also be acceptable to create the load information signal Im* by using some value other than the maximum value of the input current, for example, a value that changes in proportion to the load state.

And the power supply current calculator 16A calculates the three phase AC current values Ir, Is, and It on the basis of power supply current values Irs and Its that are obtained from the current detection means 9 of Fig. 1. In concrete terms, the three phase AC current values Ir, Is, and It are calculated from the fact that the sum of all three of the phase AC currents is zero.

Fig. 4 shows the internal structure of the power supply voltage phase calculator 11, and Fig. 5 is an explanatory figure for the processing operation performed by this power supply voltage phase calculator 11.

The power supply voltage phase calculator 11 shown in Fig. 4 includes a comparator circuit 19 that compares each of the voltage signals Vrn, Vsn, and Vtn inputted from the voltage phase detection means 7 of Fig. 1 with the respectively neighboring phase and replaces them with pulse signals, and a voltage phase calculation means 20 that detects the timings at which the pulse signals obtained with the comparator circuit 19 change (hereinafter also sometimes termed the "edges") and calculates the voltage phase signal $\theta s$. In this embodiment, the comparator circuit 19 consists of analog circuitry, and the voltage phase calculation means 20 is implemented as calculation processing that is performed by a microcomputer.

It should be understood that in recent years, with modem microcomputers, analog circuitry such as op-amps and comparators and so on may also be implemented within the microcomputers. Due to this, it is also possible to implement all of the structures of the power supply voltage phase calculator 11 shown in Fig. 4 with the processing of a single microcomputer 1.

The voltage phase calculation means 20 includes an edge detection circuit 20A, a phase error calculator 20B, a base power supply frequency generator 20C, a PI controller 20D, and a phase calculator 20E.

The edge detection circuit 20A is a function that is implemented by the microcomputer, which detects the edges of the pulse signals from the comparator circuit 19 and requests the phase error calculator 20B to perform interrupt processing for each of these edges.

The phase error calculator 20B starts calculation processing upon receipt of an interrupt processing request from the edge detection circuit 20A. In concrete terms, at each pulse signal edge, it compares together the current value of the voltage phase signal θs and the phase value for the interrupt to occur (phase value that is set in advance according to the combinations of the pulse signals for the various phases), and calculates the phase error Δθs from the difference between them. This processing is implemented on each pulse signal edge for the various phases. In other words, the calculation by the phase error calculator 20B is performed at each 60° of electrical angle of the power supply cycle.

The base power supply frequency generator 20C outputs a signal fs0 according to the predetermined power supply frequency. In concrete terms, within Japan, the power supply frequency is 50 Hz or 60 Hz. It would be acceptable for this power supply frequency to be set in advance. Or, it would also be possible to determine and set the power supply frequency automatically by measuring the intervals between the edges of the pulse signals by using a timer function of the microcomputer.

The PI controller 20D calculates a frequency correction value Δfs for the phase error Δθs calculated by the phase error calculator 20B to become zero. The PI controller 20D performs this calculation processing at each 60° of electrical angle. However while here, in this embodiment, the PI controller 20D executes this calculation at each 60° of electrical angle, it would also be acceptable for the calculation cycle of the PI controller 20D to be changed, in order to prevent fluctuations due to noise or the like. For example, it would be acceptable to arrange to build the PI controller 20D so that the calculation is executed at each 360° of electrical angle. In concrete terms, the phase error Δθs at each 60° of electrical angle may be averaged over each 360° of electrical angle, and the frequency correction value Δfs may be calculated using this average value. If the calculation is performed in this manner, it is possible to suppress fluctuations due to noise or the like.

The phase calculator 20E calculates the voltage phase signal θs by performing processing to integrate the sum fs of the signal fs0 from the base power supply frequency generator 20C and the frequency correction value Δfs from the PI controller 20D.

PLL processing is used in the processing performed by the various structures of the voltage phase calculation means 20 explained above. This operation will now be explained with reference to Fig. 5.

Fig. 5 shows, in order from the top: the waveforms of the power supply voltages from the three phase AC power supply 1 of Fig. 1 (i.e. the phase voltages); the voltage phase pulse signals outputted from the comparator circuit 19; and the voltage phase signal θs outputted from the phase calculator 20E. It should be understood that, as previously described, the voltage phase pulse signals are signals produced by comparing the voltage signals Vrn, Vsn, and Vtn with one another and replacing them with pulse signals. When the change timings (i.e. edges) are compared with the timings at which the phase voltage waveforms of the power supply voltages shown above change over between positive and negative, then it will be understood that, for each phase, the phase deviates by 30° of electrical angle.

Thus, for example, when the edge detection circuit 20A of Fig. 4 detects the edge at the point A from the voltage phase pulse signal, edge interruption processing is executed by the phase error calculator 20B. At this time, the present voltage phase signal θs and the phase when the interrupt occurred (in this case, electrical angle 90°) are compared together by the phase error calculator 20B, and the phase error Δθs is calculated. And the frequency correction value Δfs is calculated by the PI controller 20D on the basis of this phase error Δθs, and the voltage phase signal θs after amendment is calculated by the phase calculator 20E.

By repeatedly performing this operation at the edge point B, the edge point C, ..., it is possible to synchronize the voltage phase signal θs to the phase of the power supply voltage.

Concrete examples of the structure of the current error calculator 13 and of the structure of the PWM control signal generator 14 of Fig. 3 are shown in Fig. 6.

In the example of Fig. 6, the current error calculator 13 includes three current error calculators 13R, 13S, and 13T. The current error calculators 13R, 13S, and 13T respectively calculate current errors ΔIr, ΔIs, and ΔIt for the various phases.

And the PWM control signal generator 14 includes PWM signal generation means 14R, 14S, and 14T and changeover circuits 14SW1, 14SW2, and 14SW3. The PWM signal generation means 14R, 14S, and 14T respectively include comparators 14R1, 14S1, and 14T1, sample hold circuits 14R2, 14S2, and 14T2, and delay elements 14R3, 14S3, and 14T3. Each of the PWM signal generation means 14R, 14S, and 14T repeats its switching operation on a predetermined cycle, so that the current errors ΔIr, ΔIs, and ΔIt for the various phases that are outputted respectively from the current error calculators 13R, 13S, and 13T all become zero.

It should be understood that, while in this embodiment the PWM signals are generated by the method described above, it would also be acceptable to generate the PWM signals by some other method. For example, it would also be possible to generate the PWM signals using a method of comparison of triangular waves by a PI controller. However since, in this case it becomes impossible to generate a PWM signal having the correct value if integration calculation is also performed even during an interval at which switching operation is not performed, and as a result it becomes impossible to perform normal control, accordingly it is necessary to ensure that the PI controller only operates during intervals of switching operation. With this proviso, it is possible to apply a PI controller and the triangular wave comparison method for the PWM control signal generator 14.

The changeover circuits 14SW1, 14SW2, and 14SW3 in the PWM control signal generator 14 change over the phases at which the PWM signals are outputted at each 60° of electrical angle on the basis of the voltage phase signal $\theta$s, or on the basis of a corrected voltage phase signal $\theta$ss that will be explained subsequently in the description of the second embodiment.

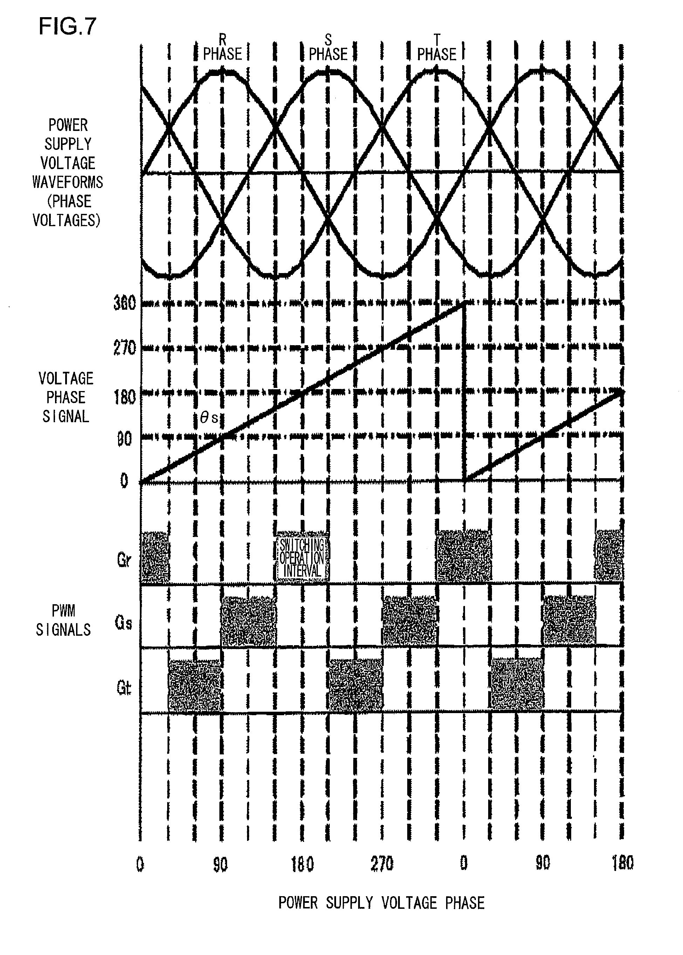

The operation of the three phase converter device of this embodiment described above will now be explained in concrete terms with reference to Fig. 7. Fig. 7 shows, in order from the top: the waveforms of the power supply voltages from the three phase AC power supply 1 of Fig. 1 (i.e. the phase voltages); the voltage phase signal $\theta$s outputted from the phase calculator 20E of Fig. 4; and PWM signals Gr, Gs, and Gt outputted from the PWM control signal generator 14.

With the converter device of this embodiment, the bidirectional power switches 6R, 6S, and 6T of Fig. 2 are made to perform their respective switching operations in the intervals at which each corresponding phase of the power supply voltages reaches intermediate electrical potential, with the objective of reducing the harmonic components of the power supply currents. In order to attain this objective, as shown in Fig. 7, the phases at which the PWM signals are outputted from the PWM control signal generator 14 are changed by the changeover circuits 14SW1, 14SW2, and 14SW3 of Fig. 6 on the basis of the power supply phase signal $\theta$s. In concrete terms, the PWM control signal generator 14 is controlled so that: the changeover circuit 14SW1 is turned ON and the PWM signal Gr for the R phase is outputted in the power supply phase signal $\theta$s electrical angle intervals 0°~30°, 150°~210°, and 330°~360°; the changeover circuit 14SW3 is turned ON and the PWM signal Gt for the T phase is outputted in the electrical angle intervals 30°~90° and 210°~270°; and the changeover circuit 14SW2 is turned ON and the PWM signal Gs for the S phase is outputted in the electrical angle intervals 90°~150° and 270°~330°.

Each time the phase of the PWM signal outputted from the PWM control signal generator 14 is changed over in this manner according to the power supply phase signal $\theta$s, it is possible to make the corresponding one among the bidirectional power switches 6R, 6S, and 6T perform its switching operation during the interval at which the power supply voltage of its phase is at intermediate electrical potential. By doing this, it is possible to reduce or to suppress the harmonic components of the power supply components.

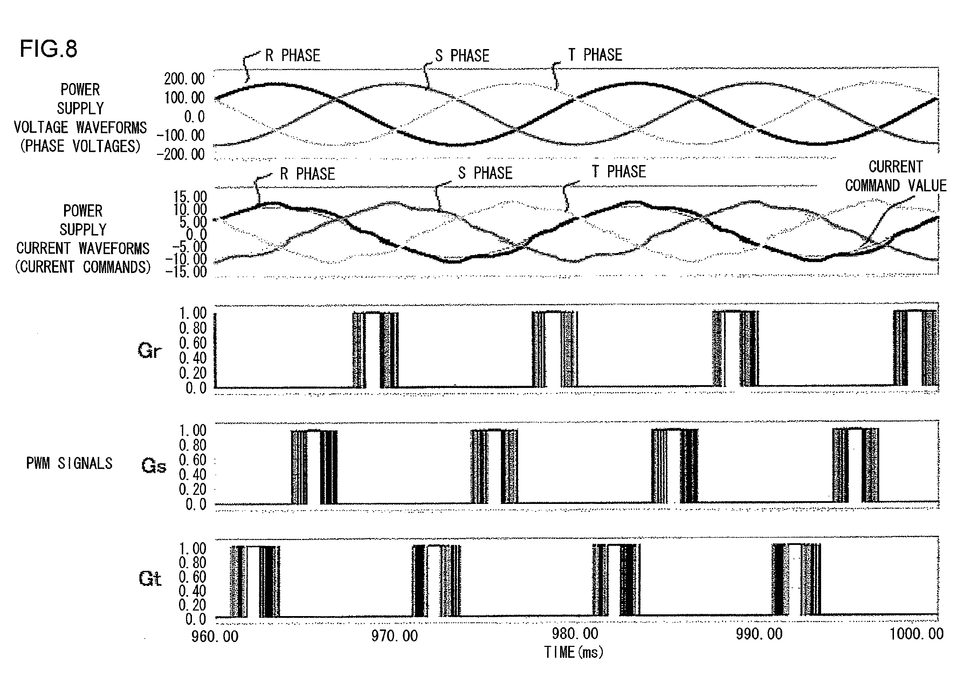

Furthermore, while in Fig. 7 the output intervals of the PWM signals corresponding to the switching operation intervals are shown by hatching, with the actual switching waveforms, the control is performed so that the PWM signals go to their ON intervals near the timings at which the phases of the power supply voltages at the intermediate electrical potentials are zero voltage. The PWM waveforms at this time are shown in concrete terms in Fig. 8.

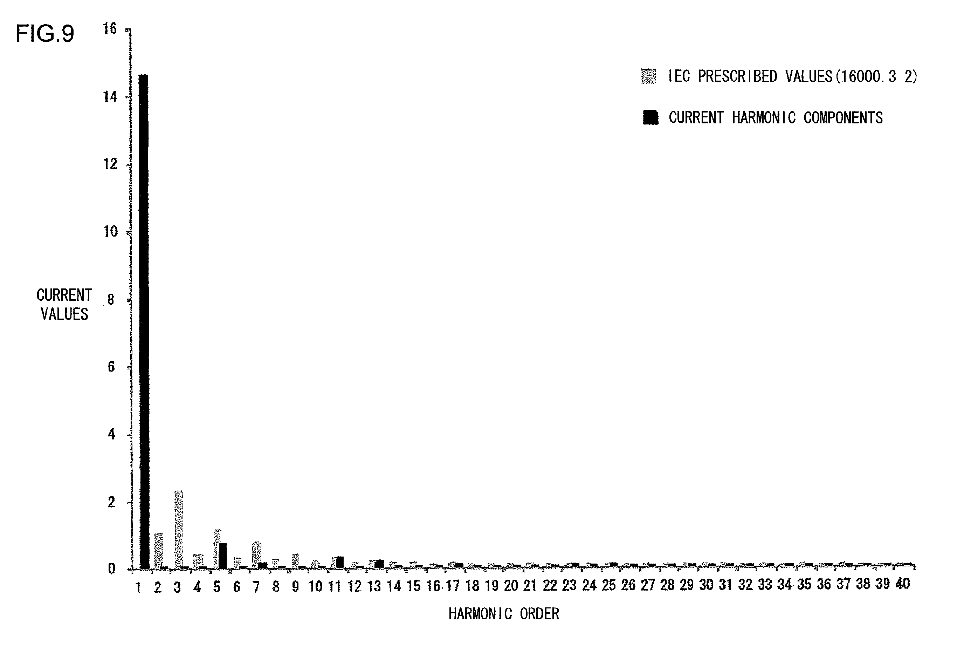

Examples of results of simulation of the power supply voltages, the power supply currents, and the waveforms of the PWM signals are shown in Fig. 8, and examples of results of simulation of the harmonic component currents are shown in Fig. 9. Fig. 8 shows, in order from the top: the waveforms of the power supply voltages from the three phase AC power supply 1 of Fig. 1 (i.e. of the phase voltages); the waveforms of the power supply currents (i.e. of the phase currents and the phase current command values); and the R phase PWM signal Gr, the S phase PWM signal Gs, and the T phase PWM signal Gt. And, among the power supply current waveforms for the various phases shown in Fig. 8, Fig. 9 shows together the FFT analysis results of the power supply current waveform for the R phase (in the neighborhood of the power supply current calculator 16A), and the IEC prescribed values (61000-3-2).

As shown in Figs. 8 and 9, it is possible to suppress the harmonic components of the power supply currents by outputting the PWM signals and performing the switching operation of the corresponding bidirectional power switches so that the PWM signals respectively go to ON in the intervals of intermediate electrical potential for the phases of the corresponding power supply voltages. As will be understood from Fig. 8, it should be noted that the PWM signals for the various phases are outputted by the PWM control signal generator 14 and the corresponding bidirectional power switches are made to perform their switching operation, so that the power supply current waveforms become current value waveforms that resemble the power supply voltage waveforms.

Furthermore, the PWM signals go to their ON intervals near the times that the power supply voltages of the phases at intermediate electrical potential become zero voltage. By doing this, the advantageous effect is obtained that the power supply current waveforms in the vicinity of the zero level become smooth. It should be understood that the phases at which the PWM signals go to ON intervals are moved forward and backward within fixed ranges, according to the load.

(Second Embodiment)

A second embodiment of the present invention will now be described using Fig. 1 and Figs. 10 through 12. In this embodiment, a technique will be explained for suppressing unbalance of the charged voltages Vc1 and Vc2 of the smoothing capacitors 4 that are connected in series.

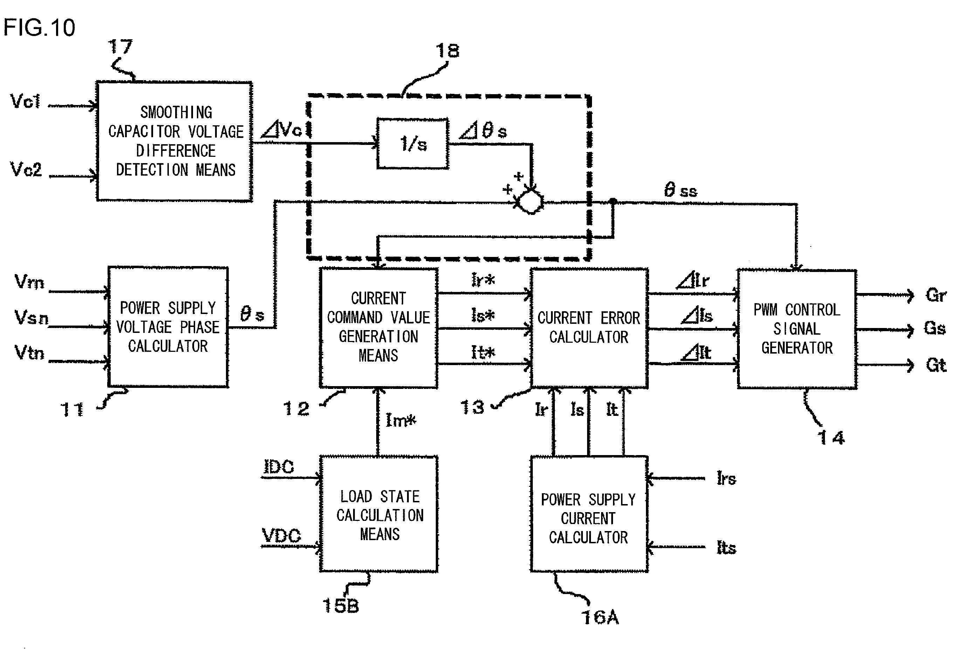

Since the circuit structure of the three phase converter device according to this embodiment follows the structure shown in Fig. 1 and explained in connection with the first embodiment, duplicated explanation thereof will be omitted. A control block diagram of the interior of the control circuit 10A of the three phase converter device according to this embodiment is shown in Fig. 10. Here, the features of difference from the control block diagram for the first embodiment shown in Fig. 3 are that a load state calculation means 15B is provided instead of the load state calculation means 15A, and that a smoothing capacitor voltage difference detection means 17 and a voltage phase correction means 18 are provided. Here, in addition to the control procedures that were explained in connection with the first embodiment, the control circuit 10A of this embodiment performs a control procedure for suppressing unbalance of the charged voltages Vc1 and Vc2 of the smoothing capacitors 4 that are connected in series, using the smoothing capacitor voltage difference detection means 17 and the voltage phase correction means 18.

While the load state calculation means 15B calculates the load information signal Im* similarly to the previously described load state calculation means 15A, the DC current value IDC from the DC current detection means 8 of Fig. 1 and the DC voltage VDC from the charged voltage detection means 41 are used as information for performing this calculation. In concrete terms, the power that the load 5 is currently consuming is calculated from the DC current value IDC and the DC voltage VDC, and the peak value of the power supply currents is calculated from this value.

Using the charged voltages Vc1 and Vc2 from the charged voltage detection means 41, the smoothing capacitor voltage difference detection means 17 calculates the difference between these charged voltages as being the smoothing capacitor voltage difference ΔVc.

The voltage phase correction means 18 calculates a voltage phase correction value Δθs using an integrating compensator, so that the smoothing capacitor voltage difference ΔVc calculated by the smoothing capacitor voltage difference detection means 17 becomes zero, and outputs the sum of this and the voltage phase signal θs as the corrected voltage phase signal θss. It should be understood that the current command value generation means 12 and the PWM control signal generator 14 respectively perform generation of the current command values and changing over of the PWM signals, using the corrected voltage phase signal θss from the voltage phase correction means 18.

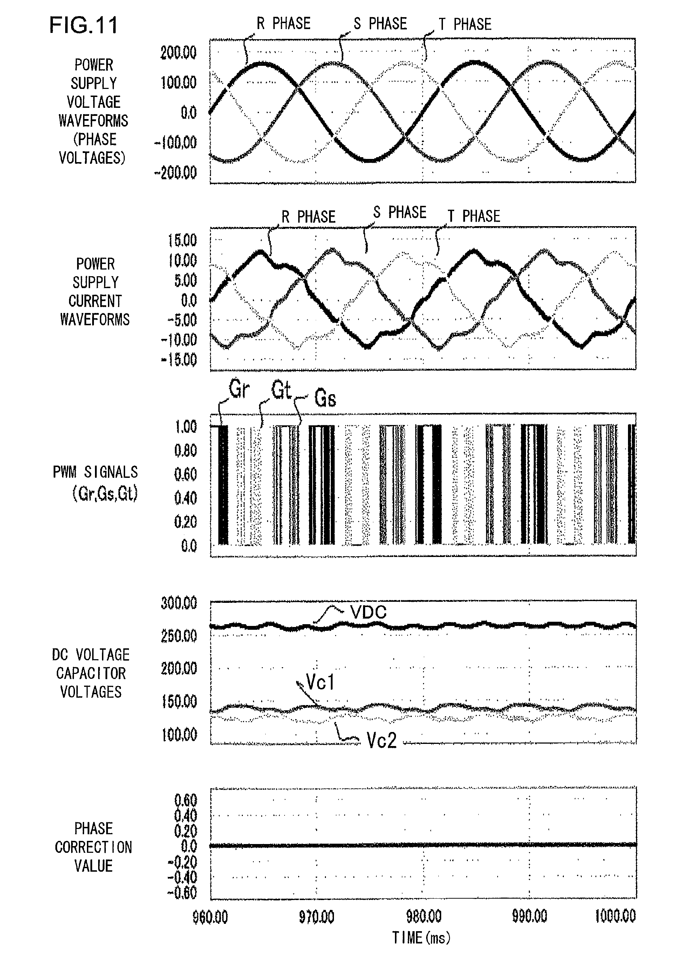

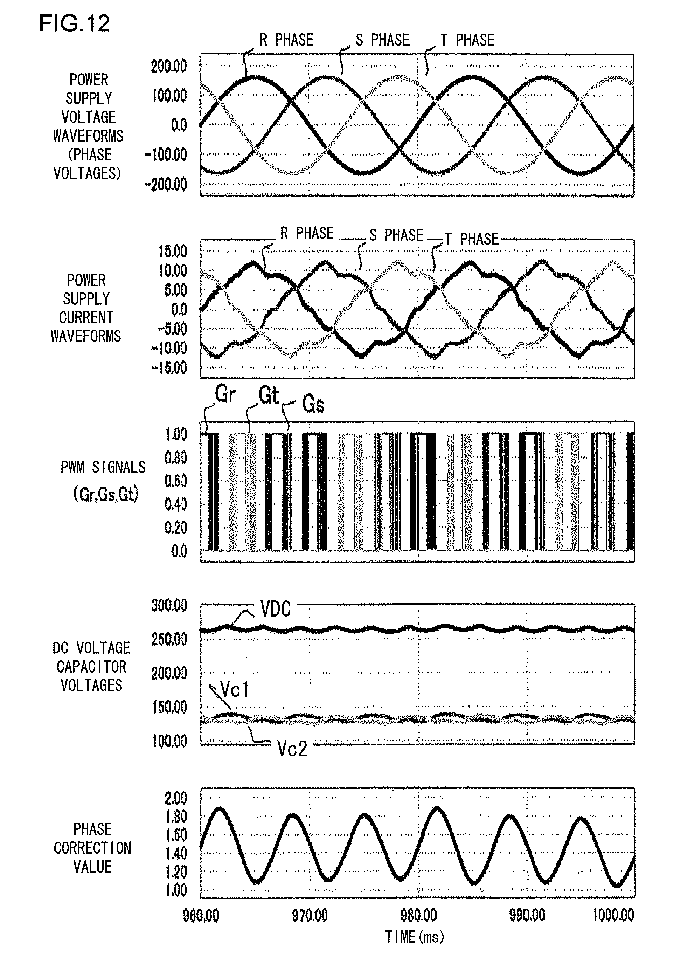

Examples of simulation results, in this embodiment, for the waveforms of the power supply voltages, the power supply currents, the PWM signals, the DC voltage, the capacitor voltages, and the phase correction value are shown in Figs. 11 and 12. In Fig. 11 an example is shown at which suppression control of the type described above is not performed, while in Fig. 12 an example is shown at which suppression control is performed. Each of Figs. 11 and 12 shows, in order from the top: the waveforms of the power supply voltages (i.e. of the phase voltages) from the three phase AC power supply 1 of Fig. 1; the power supply current waveforms; the PWM signals (for the three phases); the DC voltage VDC and the smoothing capacitor charged voltages Vc1 and Vc2; and the voltage phase correction value Δθs. It should be understood that in Figs. 11 and 12, in order to make it easier to understand the beneficial effect of suppression control according to this embodiment, results are shown when the capacitances of the smoothing capacitors 4 are half of those in the first embodiment.

When Fig. 11 and Fig. 12 are compared together, it will be understood that in Fig. 11 a difference has arisen between the smoothing capacitor charged voltages Vc1 and Vc2, since suppression control was not being performed.

On the other hand it will be understood that in Fig. 12 the difference between the smoothing capacitor charged voltages Vc1 and Vc2 becomes small, due to the fact that the voltage phase correction value Δθs is varied according to the difference between the smoothing capacitor charged voltages Vc1 and Vc2, so that it is possible to suppress unbalance between those charged voltages.

When the waveforms of Fig. 12 are outputted, the three phase converter device according to this embodiment operates as described above. In concrete terms, when the smoothing capacitor charged voltage Vc1 is less than the smoothing capacitor charged voltage Vc2, the PWM control signal generator 14 outputs PWM signals for each phase according to the corrected voltage phase signal θss, and delays the phase of the switching interval of the corresponding bidirectional power switches. Conversely, when the smoothing capacitor charged voltage Vc2 is less than the smoothing capacitor charged voltage Vc1, the PWM control signal generator 14 outputs PWM signals for each phase according to the corrected voltage phase signal θss, and advances the phase of the switching interval of the corresponding bidirectional power switches. To put it in another manner, if the charged voltage of the upper side one (on the positive side) of the smoothing capacitors that are connected in series (i.e. the smoothing capacitor charged voltage Vc1) has become low, then the phase of the switching interval is delayed, so that more positive power supply voltage is applied. Conversely, if the charged voltage of the lower side one (on the negative side) of the smoothing capacitors that are connected in series (i.e. the smoothing capacitor charged voltage Vc2) has become low, then the phase of the switching interval is advanced, so that more negative power supply voltage is applied.

As described above, according to this embodiment, it is possible to suppress unbalance between the charged voltages of the smoothing capacitors 4 by correcting the phases of the switching intervals using the difference between the charged voltages of the smoothing capacitors 4. As a result, it is possible to contemplate reduction of the capacitances of the smoothing capacitors 4 that are connected in series, and thus to implement reduction in cost.

(Third Embodiment)

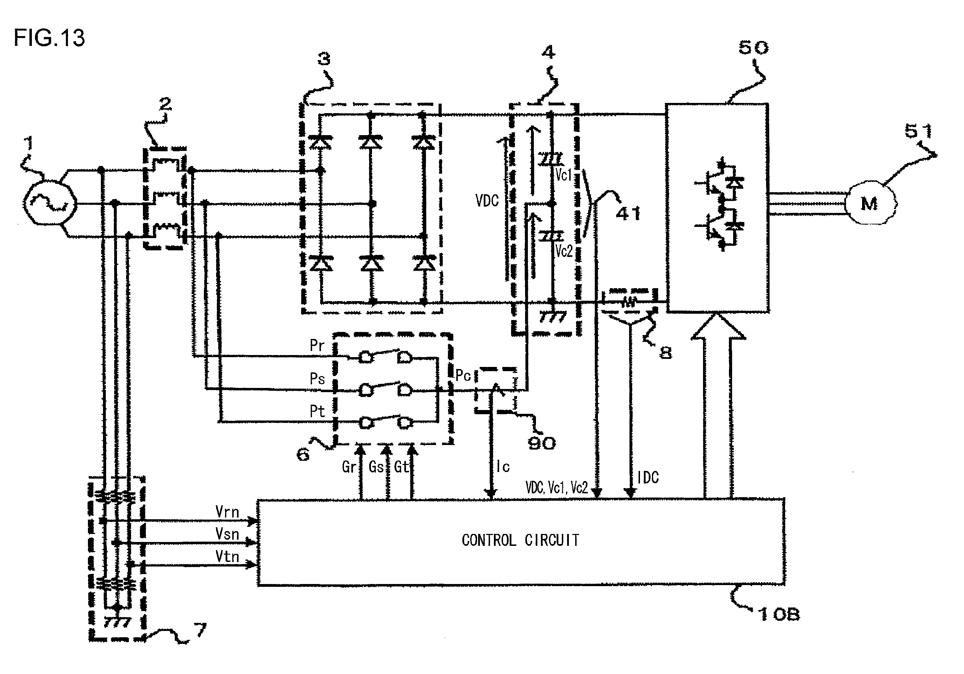

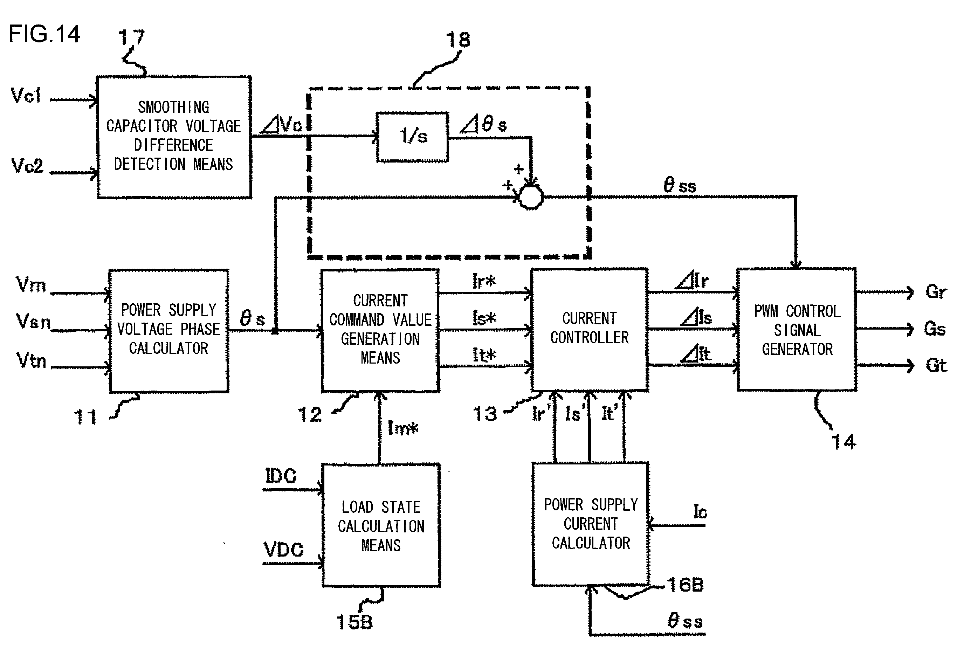

A third embodiment of the present invention will now be described using Figs. 13 through 15. Structural elements in Fig. 13 bearing the same reference symbols as in the structural diagrams for the first and second embodiments described above and shown in Fig. 1 are ones that perform the same operations, and duplicated explanation will be omitted. Furthermore, control blocks in Fig. 14 bearing the same reference symbols as in the control block diagram for the first embodiment shown in Fig. 3 and in the control block diagram for the second embodiment shown in Fig. 10 are ones that perform the same control procedures, and duplicated explanation will be omitted.

Fig. 13 shows the general structure of the three phase converter device according to the third embodiment of the present invention. In this embodiment, the features of difference from the first and second embodiments are that, instead of the load 5, an inverter device 50 that drives a motor 51 is connected as the load upon the three phase converter device, and that a control circuit 10B is provided instead of the control circuit 10A. The inverter device 50 is an inverter device that converts the DC power outputted from the three phase converter device into predetermined AC power, and that sine wave drives the motor 51 using this AC power. And inverter control processing for sine wave driving the motor 51 is installed to the control circuit 10B. It should be understood that the concrete details of this inverter control have no direct relationship with the present invention, and accordingly explanation and illustration thereof are omitted.

Furthermore while, in the first and second embodiments, the power supply currents were detected from the currents flowing to the input terminals of the three phase diode bridge 3 and by using the current detection means 9, in this embodiment, the currents that flow between the bidirectional power switches 6 and an intermediate point of the plurality of smoothing capacitors 4 (i.e. the intermediate point currents) are detected by using a current detection means 90.

The intermediate point currents detected by the current detection means 90 are currents that flow due to the bidirectional power switches 6 being made to perform their switching operations. In other words, since it is possible to detect the currents during switching with the current detection means 90, accordingly it is possible to calculate the PWM signals by using these currents.

A control block diagram of the three phase converter device of this embodiment is shown in Fig. 14. The location where Fig. 14 differs from the control block diagram of the second embodiment shown in Fig. 10 is the portion relating to the power supply current calculator 16B. While in the first and second embodiments sine wave shaped detected current values were obtained because the power supply currents were detected directly by the current detection means 9, in this embodiment, it is only possible to detect the current waveforms for the various phases flowing according to the switching operation at each 60° of electrical angle. However, since the switching operation is actually only performed at each of these intervals of 60° of electrical angle for each phase, accordingly it is possible to control each phase even though the power supply current information is available only at the intervals described above. Thus the current value Ic detected by the current detection means 90 is resolved by the power supply current calculator 16B, using the correction voltage phase θss, into current values Ir', Is', and It' for each of the phases, with these being outputted.

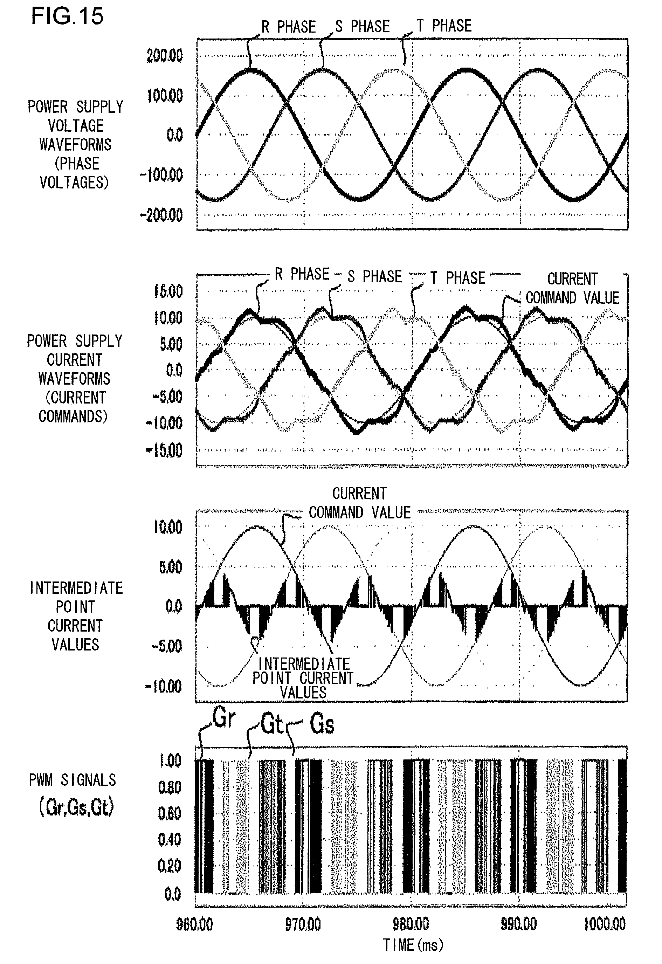

Examples of simulation results, in this embodiment, for the waveforms of the power supply voltages, the power supply currents, the intermediate currents, and the PWM signals are shown in Fig. 15. Fig. 15 shows, in order from the top: the waveforms of the power supply voltages (i.e. of the phase voltages) from the three phase AC power supply 1 of Fig. 13; the power supply current waveforms (including the current command values); and the PWM signals (for the three phases). From the simulation results shown in Fig. 15, it will be understood that PWM signals for each of the phases are generated from the current command values for each phase that are outputted corresponding to the intermediate point current values, so that control of the three phase converter device is possible in a similar manner at which in the first and second embodiments.

It should be understood that, in the case of the control method according to this embodiment, since there is a tendency for the current phases to be delayed by the influence of the inductance values of the AC reactor in the region at which the power supply current values are large, accordingly it is necessary to provide an interval at which the switching operation is paused within at least one of the intervals around the phase vicinity where the voltages of the phases of the three phase AC power supply 1 intersect. Accordingly, in the case of this embodiment, it is necessary not to perform the switching operation over the entire region of the intervals where the power supply voltages for each phase reach intermediate electrical potential, and to provide a slight interval within these intervals at which the switching operation is paused.

On the other hand, since in the first embodiment and the second embodiment the power supply currents are directly detected by the current detection means 9, and since switching operation paused intervals are automatically generated when current control is performed on the basis of those current values, accordingly there is no need to give any special consideration to switching operation paused intervals, as is the case with the third embodiment.

As has been explained above, when the three phase converter device of this embodiment is employed, the number of current sensors is reduced, so that it is possible to anticipate a further reduction in cost.

(Fourth Embodiment)

While nothing has been described in connection with the first through the third embodiments explained above in relation to any operation to raise the DC voltage, by making the switching intervals of the bidirectional power switches 6 to be greater than 60° of electrical angle, such an operation of raising the DC voltage also becomes possible. This operation for raising the DC voltage will now be explained with reference to a fourth embodiment. It should be understood that, since the circuit structure and control blocks of the three phase converter device according to this embodiment are the same as in the other embodiments described above, accordingly, in the following, only explanation of the switching operation and simulation results will be given.

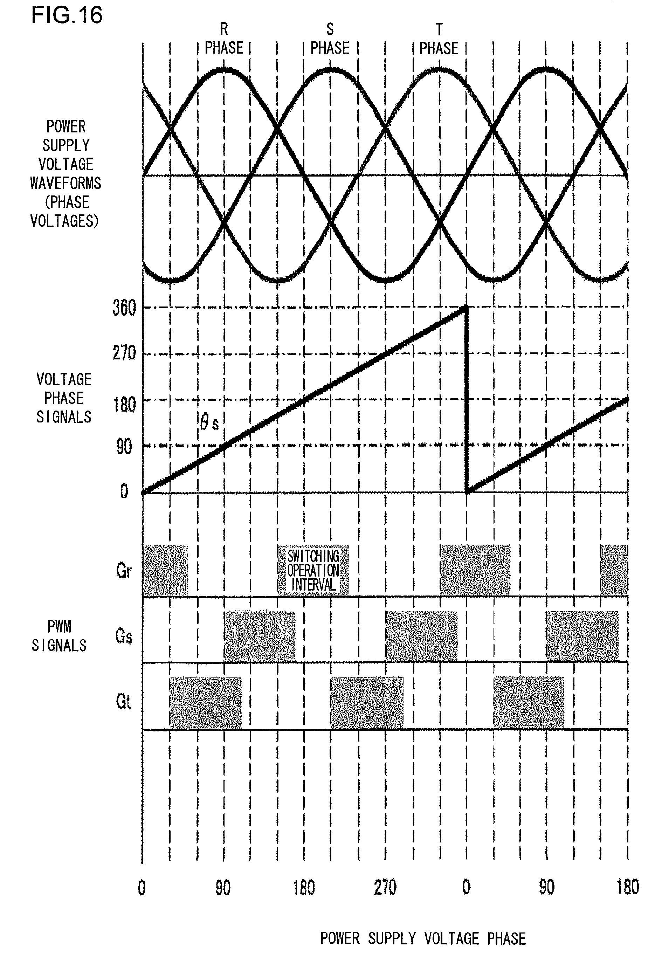

In Fig. 16, a similar explanatory figure for switching operation to Fig. 7 is shown. The feature of difference between Fig. 16 and Fig. 7 is that the switching operation intervals for the PWM signals Gr, Gs, and Gt are greater than 60° of electrical angle. To put it in another manner, this feature is that intervals are present at which more than one of the bidirectional power switches 6 for different phases are performing their switching operation at the same time. Here, as one example, the case will be considered at which the switching interval of the bidirectional power switches 6 is 70° to 80° of electrical angle.

By making a plurality of the bidirectional power switches 6 that correspond to mutually different phases perform their switching operation at the same time in this way, the three phase AC power supply 1 is short circuited via the three phase AC reactor 2, so that voltage increasing chopper operation is performed. Supply of power to the DC side is performed in this manner, so that operation (control) to raise the DC voltage becomes possible.

Now, the more the switching operation intervals of the bidirectional power switches 6 are widened, the more is it possible to reduce the harmonic components of the current waveforms, and it is also possible to increase the raising amount of the DC voltage, but the switching losses also increase. Accordingly, it is necessary to select the switching operation intervals of the bidirectional power switches 6 appropriately, according to the system (i.e. according to the product or the like) at which the three phase converter device of this embodiment is applied. Moreover, it would also be possible to make the switching operation intervals be variable according to the load state.

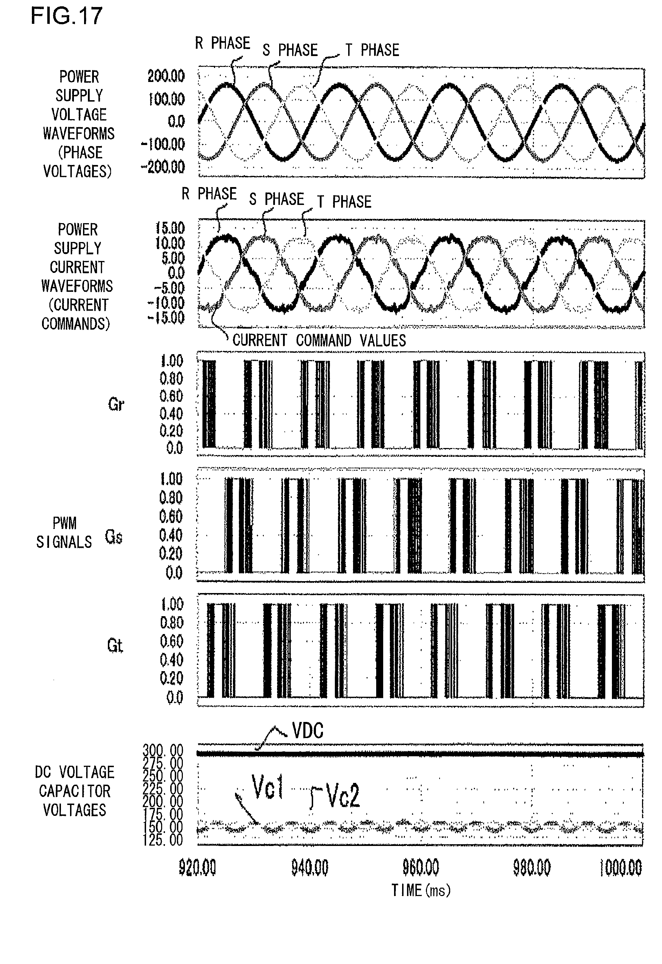

For this embodiment, Fig. 17 shows an example of simulation results for the waveforms of the power supply voltages, the power supply currents, the PWM signals, the DC voltage, and the capacitor voltages. In Fig. 17 simulation results are shown under similar load conditions to those of the simulation results of Fig. 12 shown for the second embodiment described above (i.e. with the currents consumed by the load being equal), and with the DC voltage being controlled to 300 V (in Fig. 12, 265 V). Here the switching operation interval for each phase is 90° of electrical angle, and it is arranged to start the switching operation of each phase at a timing such that the power supply voltage of each phase overlaps the power supply voltage of another phase. It is desirable to set the phases at which the switching operations are started to be around timings such that the power supply voltage of the various phases overlap in this manner.

With this result as well, in a similar manner to Fig. 12, by making the intervals at which the PWM signals are ON to be around when the power supply voltages for the phases at intermediate electrical potential become zero, it is possible to make the power supply current waveform be a smoother sine wave shaped waveform.

(Application Embodiments)

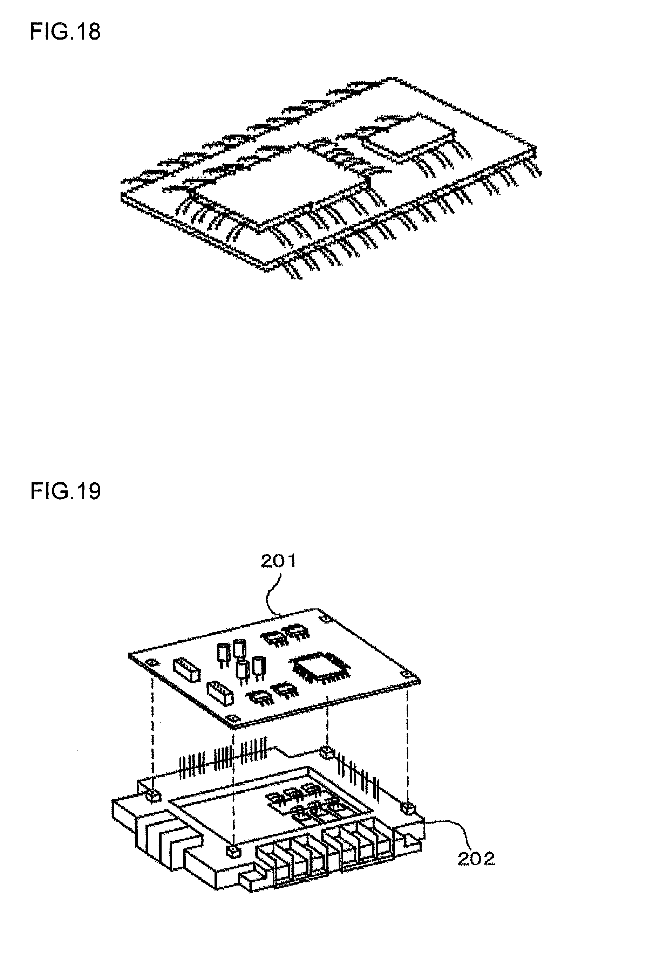

Fig. 18 is a figure showing an embodiment at which the present invention as explained in terms of the first through fourth embodiments above is applied, and is a figure showing the external appearance of a hybrid IC at which the drive control portion of the converter device according to the present invention has been adapted.

Furthermore, Fig. 19 is an example of a figure showing the external appearance of a motor drive module at which the converter device according to the present invention has been applied. The module shown in Fig. 19 is a motor drive module at which a semiconductor power element 202 is mounted upon a control unit board 201. Voltage detection circuits and current detection circuits of various types as described with reference to Fig. 1 and/or Fig. 13 above (i.e. the voltage phase detection means 7, the DC current detection means 8, the current detection means 9 or 90, and so on) and the control circuit 10A or 10B and so on are implemented upon the control unit board 201.

As described above, it is possible to succeed in making the converter device more compact by forming it as a hybrid IC and by modularization, so that reduction of its cost may be anticipated. It should be understood that "module" means "standardized structural unit", and consists of hardware and software components that may be separate. Furthermore while it is desirable that, in manufacture, the various components of a converter device that is to be formed as a hybrid IC or that is to be modularized should be arranged upon the same board, nevertheless the arrangement of the components is not limited to all being upon the same board. In other words, it would also be acceptable for the various components of the converter device to be arranged upon a plurality of circuit boards that are all housed within the same casing.

Since, according to this application embodiment, it is possible to keep down the overall cost of the product and to reduce its volume, accordingly it is possible to enhance the general applicability and the convenience of a motor drive apparatus employing a module that includes a converter device according to the present invention.

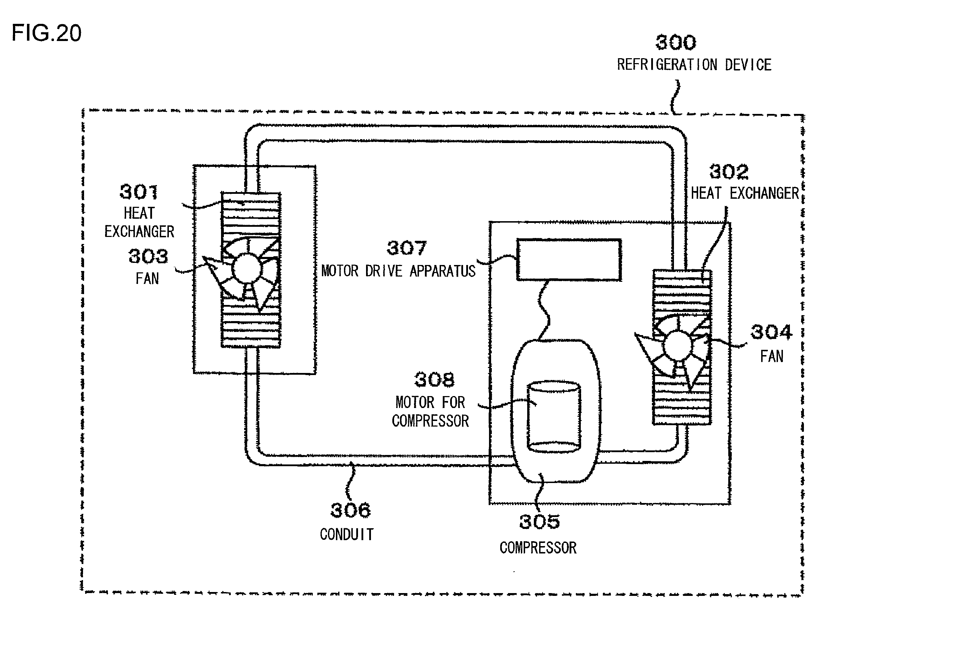

Fig. 20 is a structural diagram of a refrigerating and air conditioning apparatus for an air conditioner or a refrigerator, at which a compressor motor is driven using the motor drive module described above. In Fig. 20, the refrigeration device 300 is a device that regulates temperature, and includes heat exchangers 301 and 302, fans 303 and 304, a compressor 305, a conduit 306, and a motor drive apparatus 307.

It should be understood that the compressor motor 308 is a synchronous permanent magnet motor, or is a three phase induction motor, and is disposed in the interior of the compressor 305. The motor drive apparatus 307 converts three phase AC power supplied from the three phase AC power supply into DC power and supplies it to an internal inverter for driving the motor, thus driving the compressor motor 308 with that DC power. Refrigerant is compressed within the compressor 305 by the compressor motor 308 being driven, and thereby operation of a refrigeration cycle is implemented.

By using the converter device explained in the first through fourth embodiments described above for the refrigerating and air conditioning apparatus of Fig. 20, it is possible to satisfy the harmonic component regulations, since it is possible to reduce the harmonic components of the power supply current and to enhance the power factor. Furthermore, since it is possible to increase the DC voltage by around 15% as compared with the use of a diode rectifier, and since it is thus possible to enhance the drive performance on the high speed side, accordingly it is possible to implement increase of the output range of the air conditioning device or refrigeration device.

The present invention can be applied to a converter device that converts three phase AC power supplied from a three phase AC power supply to DC power, or to a device that utilizes such a converter device (for example a motor drive apparatus, or a refrigerating and air conditioning apparatus or the like).

The content of the disclosure of the following priority application is incorporated herein by reference:

Japanese Patent Application No. 2010-202 617 (filed on 10 September 2010).

## Claims

1. A power conversion apparatus, comprising:

   a three phase AC reactor that is connected to a three phase AC power supply;
   a three phase diode bridge;
   a plurality of smoothing capacitors, provided between the DC output side of the three phase diode bridge and a DC load, that are mutually connected in series;
   bidirectional power switches provided, corresponding to each phase of the three phase AC power supply, between the AC input side of the three phase diode bridge and an intermediate point of the plurality of smoothing capacitors;
   a voltage phase detection means that detects the voltage phase of the three phase AC power supply;
   a current detection means that detects the currents of the three phase AC power supply; and
   a controller that controls the bidirectional power switches; wherein
   the controller controls the bidirectional power switches so that the bidirectional power switch corresponding to the phase of the three phase AC power supply at intermediate electrical potential is made to perform its switching operation for a predetermined interval.

2. A power conversion apparatus according to Claim 1, wherein
   the controller makes the bidirectional power switch corresponding to the phase of the three phase AC power supply at intermediate electrical potential perform its switching operation to be ON in an interval around the timing at which the voltage of the corresponding intermediate electrical potential becomes zero.

3. A power conversion apparatus according to Claim 1 or Claim 2, wherein
   the controller makes the bidirectional power switch corresponding to the phase of the three phase AC power supply at intermediate electrical potential perform its switching operation in an interval of the corresponding intermediate electrical potential, or in an interval greater than that interval.

**4.** A power conversion apparatus according to Claim 3, wherein
the controller makes the bidirectional power switch corresponding to the phase of the three phase AC power supply at intermediate electrical potential perform its switching operation in an interval of 60° or more of electrical angle.

**5.** A power conversion apparatus according to any one of Claims 1 through 4, wherein
the controller makes the bidirectional power switch corresponding to the phase of the three phase AC power supply at intermediate electrical potential perform its switching operation for the predetermined interval so that the current of the three phase AC power supply becomes a predetermined current value.

**6.** A power conversion apparatus according to Claim 5, wherein
the controller makes the bidirectional power switch corresponding to the phase of the three phase AC power supply at intermediate electrical potential perform its switching operation for the predetermined interval so that the current of the three phase AC power supply becomes a current value having a waveform that resembles that of the voltage phase of the three phase AC power supply.

**7.** A power conversion apparatus according to any one of Claims 1 through 6, further comprising a charged voltage detection means that detects the charged voltages of the plurality of smoothing capacitors, wherein
the controller corrects the phases of the intervals at which the bidirectional power switches perform their switching operation so that the charged voltages of the plurality of smoothing capacitors balance.

**8.** A power conversion apparatus according to Claim 7, wherein:

the plurality of smoothing capacitors comprise a first smoothing capacitor that is connected to the positive side and a second smoothing capacitor that is connected to the negative side; and
the controller controls the bidirectional power switches so as to delay the phases of the intervals at which the bidirectional power switches perform switching operation when the charged voltage of the first smoothing capacitor is lower than the charged voltage of the second smoothing capacitor, and so as to advance the phases of the intervals at which the bidirectional power switches perform switching operation when the charged voltage of the first smoothing capacitor is higher than the charged voltage of the second smoothing capacitor.

**9.** A power conversion apparatus according to any one of Claims 1 through 8, wherein
the current detection means detects the currents of the three phase AC power supply from the currents flowing between the bidirectional power switches and an intermediate point of the plurality of smoothing capacitors.

**10.** A power conversion apparatus according to Claim 9, wherein
the controller provides a paused interval in the switching operations of the bidirectional power switches.

**11.** A power conversion apparatus according to Claim 10, wherein
the controller provides the paused interval within at least one of the intervals around the vicinity of the phases at which the voltages of the various phases of the three phase AC power supply intersect.

**12.** A motor drive apparatus, comprising a converter circuit that converts three phase AC power supplied from a three phase AC power supply into DC power and an inverter that converts the DC power outputted from the converter circuit to AC power and that drives a motor using the AC power, wherein the converter circuit comprises:

a three phase AC reactor that is connected to the three phase AC power supply;
a three phase diode bridge;
a plurality of smoothing capacitors, provided between the DC output side of the three phase diode bridge and a DC load, that are mutually connected in series;
bidirectional power switches provided, corresponding to each phase of the three phase AC power supply, between the AC input side of the three phase diode bridge and an intermediate point of the plurality of smoothing capacitors;
a voltage phase detection means that detects the voltage phase of the three phase AC power supply;
a current detection means that detects the currents of the three phase AC power supply; and
a controller that controls the bidirectional power switches; and wherein
the controller controls the bidirectional power switches so that the bidirectional power switch corresponding to the phase of the three phase AC power supply at intermediate electrical potential is made to perform its switching operation for a predetermined interval.

**13.** A motor drive apparatus according to Claim 12, wherein
the controller makes the bidirectional power switch corresponding to the phase of the three phase AC power supply at intermediate electrical potential perform its switching operation in an interval of the corresponding intermediate electrical potential, or in an interval greater than that interval.

**14.** A refrigerating and air conditioning apparatus, comprising a motor drive apparatus according to Claim 12 or Claim 13, and a compressor in which the motor is provided, and that compresses refrigerant in its interior according to driving of the motor.

# FIG.1

14

FIG.2

FIG.3

EP 2 615 732 A1

FIG.4

EP 2 615 732 A1

# FIG.5

POWER SUPPLY VOLTAGE PHASE

FIG.6

## FIG.7

POWER SUPPLY VOLTAGE PHASE

# FIG.8

POWER SUPPLY VOLTAGE WAVEFORMS (PHASE VOLTAGES)

R PHASE    S PHASE    T PHASE

200.00
100.00
0.0
-100.00
-200.00

POWER SUPPLY CURRENT WAVEFORMS (CURRENT COMMANDS)

R PHASE    S PHASE    T PHASE    CURRENT COMMAND VALUE

15.00
10.00
5.00
0.0
-5.00
-10.00
-15.00

PWM SIGNALS

Gr

1.00
0.80
0.60
0.40
0.20
0.0

Gs

1.00
0.80
0.60
0.40
0.20
0.0

Gt

1.00
0.80
0.60
0.40
0.20
0.0

960.00    970.00    980.00    990.00    1000.00

TIME (ms)

EP 2 615 732 A1

FIG.9

FIG.10

EP 2 615 732 A1

FIG.11

POWER
SUPPLY
VOLTAGE
WAVEFORMS
(PHASE
VOLTAGES)

POWER
SUPPLY
CURRENT
WAVEFORMS

PWM SIGNALS
(Gr,Gs,Gt)

DC VOLTAGE
CAPACITOR
VOLTAGES

PHASE
CORRECTION
VALUE

TIME (ms)

FIG.12

POWER SUPPLY VOLTAGE WAVEFORMS (PHASE VOLTAGES)

POWER SUPPLY CURRENT WAVEFORMS

PWM SIGNALS (Gr,Gs,Gt)

DC VOLTAGE CAPACITOR VOLTAGES

PHASE CORRECTION VALUE

TIME(ms)

## FIG.13

EP 2 615 732 A1

# FIG.14

Vc1 →
Vc2 → **SMOOTHING CAPACITOR VOLTAGE DIFFERENCE DETECTION MEANS** (17)

$\Delta Vc$ → **1/s** (18) → $\Delta \theta s$ → (+/+) → $\theta ss$

Vrn →
Vsn →
Vtn → **POWER SUPPLY VOLTAGE PHASE CALCULATOR** (11) — $\theta s$ →

**CURRENT COMMAND VALUE GENERATION MEANS** (12) — Ir*, Is*, It* →

**CURRENT CONTROLLER** (13) — $\Delta$Ir, $\Delta$Is, $\Delta$It →

**PWM CONTROL SIGNAL GENERATOR** (14) → Gr, Gs, Gt

Im* ↑

IDC →
VDC → **LOAD STATE CALCULATION MEANS** (15B)

Ir', Is', It' ↑

**POWER SUPPLY CURRENT CALCULATOR** (16B) ← Ic, $\theta ss$

EP 2 615 732 A1

FIG.15

POWER SUPPLY VOLTAGE WAVEFORMS (PHASE VOLTAGES)

R PHASE   S PHASE   T PHASE

200.00
100.00
0.0
-100.00
-200.00

POWER SUPPLY CURRENT WAVEFORMS (CURRENT COMMANDS)

R PHASE   S PHASE   T PHASE   CURRENT COMMAND VALUE

15.00
10.00
5.00
0.0
-5.00
-10.00
-15.00

INTERMEDIATE POINT CURRENT VALUES

CURRENT COMMAND VALUE

10.00
5.00
0.0
-5.00
-10.00

INTERMEDIATE POINT CURRENT VALUES

PWM SIGNALS (Gr,Gs,Gt)

Gr   Gt   Gs

1.00
0.80
0.60
0.40
0.20
0.0

960.00      970.00      980.00      990.00      1000.00

TIME (ms)

28

FIG.16

POWER SUPPLY VOLTAGE PHASE

FIG.17

FIG.18

FIG.19

# FIG.20

**300**
REFRIGERATION DEVICE

**301**
HEAT
EXCHANGER

**303**
FAN

**307**
MOTOR DRIVE APPARATUS

**302**
HEAT EXCHANGER

**304**
FAN

**308**
MOTOR FOR
COMPRESSOR

**306**
CONDUIT

**305**
COMPRESSOR

## INTERNATIONAL SEARCH REPORT

| | International application No. |
|---|---|
| | PCT/JP2011/068698 |

**A. CLASSIFICATION OF SUBJECT MATTER**
*H02M7/12(2006.01)i*

According to International Patent Classification (IPC) or to both national classification and IPC

**B. FIELDS SEARCHED**

Minimum documentation searched (classification system followed by classification symbols)
H02M7/12

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2000-295853 A (Daikin Industries, Ltd.), 20 October 2000 (20.10.2000), paragraphs [0019] to [0022], [0050] to [0054] (Family: none) | 1-14 |
| Y | JP 2010-22116 A (Daikin Industries, Ltd.), 28 January 2010 (28.01.2010), paragraphs [0045], [0048], [0061] to [0064] (Family: none) | 1-14 |
| Y | JP 2005-65435 A (Matsushita Electric Industrial Co., Ltd.), 10 March 2005 (10.03.2005), paragraphs [0010], [0011]; fig. 5 (Family: none) | 2-14 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 November, 2011 (14.11.11) | 22 November, 2011 (22.11.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2011/068698 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2003-174779 A  (Daikin Industries, Ltd.),<br>20 June 2003 (20.06.2003),<br>paragraphs [0060], [0084], [0146] to [0149];<br>fig. 4, 5, 38<br>& JP 2009-189241 A | 2-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004166359 A
- JP 3422218 B
- JP 2010202617 A